# NEW EUROPEAN PATENT SPECIFICATION

(11) **EP 1 638 867 B2**
(45) Date of publication and mention of the opposition decision: **28.12.2011**
(45) Mention of the grant of the patent: 07.05.2008
(21) Application number: 04748696.4
(22) Date of filing: 30.06.2004
(51) Int. Cl.: B65G 1/04, B65G 1/137

(54) **METHOD FOR OPERATING A SYSTEM FOR THE TEMPORARY STORAGE OF GOODS, IN PARTICULAR PIECES OF LUGGAGE**
VERFAHREN ZUM BETRIEB EINER ANORDNUNG ZUM ZWISCHENSPEICHERN VON GÜTERN, INSBESONDERE GEPÄCKSTÜCKEN
PROCÉDÉ DESTINÉ AU FONCTIONNEMNT D'UN SYSTEME DE STOCKAGE TEMPORAIRE DE BIENS, EN PARTICULIER DE BAGAGES

(30) Priority: 01.07.2003 NL 1023788
(43) Date of publication of application: 29.03.2006
(73) Proprietor: VANDERLANDE INDUSTRIES NEDERLAND B.V., 5466 RB Veghel (NL)
(72) Inventor: WEIJENBERG, Gaston, Joseph, Anne, Marie, NL-5627 ME Eindhoven (NL); POTTERS, Marinus, Adrianus, Maria, NL-5652 EM Eindhoven (NL)
(74) Representative: Dorna, Peter
(86) International application number: PCT/NL2004/000466
(87) International publication number: WO 2005/002999

(56) References cited:
- WO-A-03/010074
- AU-B- 480 983
- DE-U1- 29 514 806
- JP-A- 63 001 602
- JP-A- 63 001 604
- JP-A- 63 001 605
- US-A- 6 139 240

## Description

The invention relates to a method for operating a system for temporary storage of goods, in particular pieces of luggage.

For various reasons it may be desirable to store goods temporarily. At airports, for example, pieces of luggage such as suitcases and bags are checked in well in advance of the departure time of the flight in question and before the associated aeroplane is available for loading. Typically, the period of time that passes between the checking-in of luggage and the loading of a plane with the checked-in luggage will vary from a few hours to a few days. In addition to that, situations occur in which pieces of luggage for transfer flights arrive so much earlier at an airport that they cannot be directly loaded into the aeroplane of the connecting flight.

To prevent pieces of luggage as referred to above (over)burdening the luggage handling system of an airport, it is known to store such pieces of luggage temporarily. In this connection reference is first made to US patent US 5,575,375, which describes a system for temporary storage of "early" luggage, using an endless storage conveyor to which on the one hand a supply conveyor connects for supplying pieces of luggage to the storage conveyor on the one hand and from which on the other hand a discharge conveyor branches off for discharging pieces of luggage that are stored on the storage conveyor. The endless storage conveyor is arranged in a serpentine fashion to maximize the length of the conveyor with respect to the floor area it covers. The storage conveyor comprises carts provided with a number of tiltable trays for the luggage, which are positioned one above another. An important drawback of such a temporary storage system is the fact that pieces of luggage present on the storage conveyor cannot be individually moved, which implies that if one piece of luggage is to be unloaded via the discharge conveyor, not only the piece of luggage in question but the entire storage conveyor carrying the other pieces of luggage needs to be moved, in such a manner that the piece of luggage in question will be positioned at the location where the discharge conveyor branches off from the storage conveyor. In addition, in the event of a failure of the endless storage conveyor for whatever reason, temporary storage of new luggage is not possible and, even worse, luggage that is already stored on the conveyor cannot be made available, either.

To overcome such drawbacks, use is made of a storage system that comprises a number of parallel belt conveyors on which luggage is temporarily stored. In this connection reference is e.g. made to International patent application WO 02/06141 A1. In the system described therein, one or more parallel conveyors may be assigned to a particular flight, for example, so that the conveyor(s) in question can deliver their load to a conveyor system for transport to the aeroplane in question as soon as the plane in question is ready for being loaded, in which case the other parallel conveyors need not be activated. An important drawback of such a temporary storage system, however, is the fact that the capacity utilisation thereof that is attainable in practice is limited, for example because only part of the length of a parallel conveyor can be utilised. What is more, in the event of failure of a parallel conveyor for whatever reason, luggage that is temporarily stored on said conveyor cannot be made available, and temporary storage of new luggage on said conveyor is furthermore not possible.

A common drawback connected with the above-mentioned drawbacks of the prior art systems is the fact that the known temporary storage systems are not suitable, or at least to a lower degree, for use in relatively large airports. The temporary storage system that was placed into service at Amsterdam Schiphol Airport in June 2001 was a considerable improvement on the prior art in this connection.

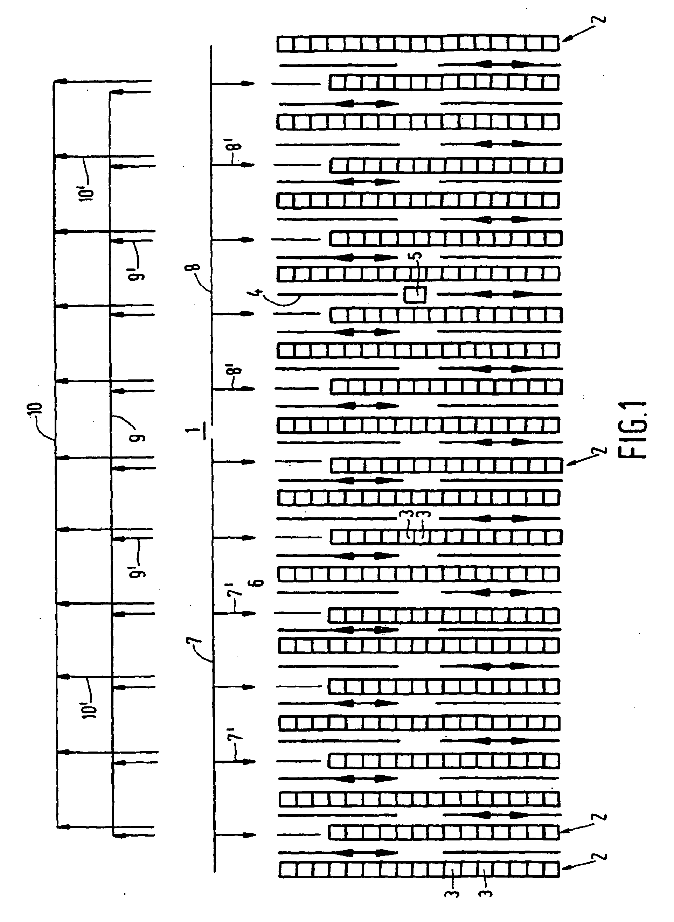

Figure 1 illustrates in a very schematic top plan view the manner in which said temporary storage system, which is indicated by numeral 1 in the figure, functions. Use is made of a number of racks 2 extending parallel to each other for the temporary storage of pieces of luggage. Each rack 2 comprises a number of storage positions 3 at different vertical levels, one level of which is shown for each rack 2 in figure 1. Each storage position 3 is arranged for accommodating a uniform tray with a piece of luggage present therein, in which tray pieces of luggage are presented to the storage system 1. A longitudinal guide 4 extends between each pair of adjacent racks 2, over the length of the longer rack 2 of each pair, along which guides a lift 5 (only shown for one longitudinal guide 4 in figure 1) is movable. For each pair of longitudinal guides 4 or each pair of lifts 5, an exchange station 6 is provided between said longitudinal guides, at one end of said longitudinal guides 4. Such exchange stations 6 each comprise a single supply station and two discharge stations, which stations are not individually shown in figure 1. Each supply station is arranged on the one hand for receiving luggage trays, which may or may not be filled with luggage, from the supply conveyor 7 or 8, via respective branches 7' or 8' thereof, and deliver said luggage trays 21, which may or may not be filled with luggage, to one of the associated lifts 5 again, which subsequently moves the trays in question to a desired storage position 3 for transferring the trays to said luggage position 3. On the other hand, the discharge stations are capable of receiving luggage trays coming from storage positions 3, which may or may not be filled with luggage, from a lift 5 again and deliver said trays to a discharge conveyor 9, 10, to which a number of sub-conveyors 9', 10' extending from the various exchange stations 6 connect.

As figure 1 shows, on one side of the row of racks 2 trays are supplied by means of the supply conveyor 7, whilst on the other side of the row of racks 2 the supply of luggage trays takes place via the supply conveyor 8. The discharge conveyors 9 and 1.0, however, are each arranged for individually discharging luggage from all the exchange stations 6 (more specifically from the discharge stations thereof) or from all racks 2. This form of redundancy as regards the discharging of luggage from the racks 2 is based on the fact that it is precisely at airports that a very high degree of certainty is required that luggage which is temporarily stored in one of the racks will indeed be available for being loaded into a plane, because in an extreme case a delay might lead either to a plane with passengers on board leaving without the passengers' luggage or to a plane being delayed. Either situation may have financial consequences for the airport, apart from the personal inconvenience to the passengers such a situation may involve.

Although the supply conveyors 7, 8 and the discharge conveyors 9, 10 are shown to be arranged in side-by-side relationship, in actual practice the supply conveyors 7, 8 and the discharge conveyors 9, 10 each form part of a loop, which may or may not be a closed loop, which loops are disposed one above another. This implies, therefore, that there are four different vertical levels of conveyors disposed one above another. In addition to that, also the branches 7', 8' and the subconveyors 9', 10' are disposed at four corresponding vertical levels. The same applies as regards the associated supply stations and discharge stations. The use of said different vertical levels as described above requires the use of a great number of system components and involves high costs.

Although the prior art storage system as described with reference to figure 1 undeniably offers many advantages in comparison with the, likewise above-discussed, prior art according to US 5,575,375 and WO 02/06141 A1, it is an object of the present invention to provide a further improvement of the temporary storage system. More specifically it is an object of the invention to provide, whether or not in preferred embodiments thereof, a method for operating a temporary storage system wherein stored goods can be made available again for further handling whilst maintaining a very high degree of reliability. Furthermore it is an object of the invention to provide a temporary storage system wherein the required length of the supply conveyors and the discharge conveyors can be reduced, as a result of which also the cost price of the temporary storage system will be reduced. In order to accomplish the above objects, the present invention provides a method according to claim 1. This makes it possible to reduce the required length of the conveyors associated with the supply conveyor system and the discharge conveyor system, in that the common conveyor is used both for supplying goods to a storage position and for discharging goods from the storage positions, which also implies that in principle goods intended for storage at a storage position as well as goods that, on the contrary, have been made available from a storage position again are present at indiscriminate positions on said common conveyor.

US 6,139,240 describes an automated warehouse comprising a plurality of pairs of article storage shelves which are disposed in parallel with each other. The pairs of article storage shelves are disposed with the respective entrances thereof opposed to each other. Between each paired of article storage shelves, there is provided a stacker crane which is moveable along the entrances of these paired shelves.

Like US 6,139,240, also WO 03/010074 A1 describes a a system for temporary storage of goods, the system having pairs of parallel racks, one longitudinal side of each rack facing a longitudinal side of the other rack of the pair of racks. On both outer sides of each pair of racks a lift moveable along the racks is provided.

It is noted that US patent US 6,139,240, German utility model DE 29724039 U1 and International patent application WO 03/010074 A1 describe storage systems which are designed for temporary storage of pieces of luggage at airports. This will appear partly from the fact that, none of said temporary storage systems comprise racks both for delivering goods to and for collecting goods from storage positions from both longitudinal sides of racks. In other words: with the method according to claim 1, the storage positions can be approached from two sides both for loading and for unloading the storage positions, in contrast to the systems as described in the three aforesaid documents. With the method according to the invention, failure of one lift will not lead to all storage positions of the rack along which the lift in question can move becoming inaccessible, because the lift on the other side of the rack is also capable of gaining access to said storage positions. Not counting exceptions, the possibility of storage positions being inaccessible is unacceptable in the temporary storage of pieces of luggage at airports. With temporary storage systems according to the aforesaid three documents, on the other hand, this is generally not a problem, since the goods that are stored in such storage positions are frequently not unique, in the sense that the same types of goods are stored at various storage positions of various racks. It will be understood that pieces of luggage, on the other hand, are unique and cannot be substituted for other pieces of luggage.

Preferably, two common conveyors are provided in order to obtain redundancy with regard to the supply conveyor system and the discharge conveyor system.

Preferably, goods can be supplied to and be discharged from storage positions of one and the same rack via a the two common conveyors. Thus, goods can still be discharged from storage positions of the rack in question in the event of a failure of one common conveyor, but also, more importantly even, goods can still be supplied to storage positions of the rack in question. The latter is in particular important as otherwise there would be a risk of the system getting "full", because goods, for example empty storage trays, cannot be stored and consequently will have to keep circulating.

In a highly preferred embodiment, the supply and the discharge of goods respectively to and from the same storage positions of one and the same rack via the one common conveyor take place via a lift disposed on one longitudinal side of the rack in question, and the supply and the discharge of goods respectively to and from the same storage positions of one and the same rack via the other common conveyor take place via a lift on the opposite longitudinal side of the rack in question. Thus, the lifts on the two longitudinal sides of a rack connect to different common conveyors, so that failure of one of the two lifts will not lead to the storage positions of the rack along which said lift extends becoming inaccessible to both common conveyors.

The two common conveyors are preferably disposed one above the other, so that supply and discharge of goods to and from storage positions can take place at two different vertical levels, fully independently of each other, whilst the required amount of space is nevertheless relatively small.

In order to further enhance the level of reliability, it is preferable to provide a separate control system for each of the two common conveyors, each control system being capable of operating independently of the other control system. Thus, failure of one of the two control system will not lead to the system as a whole ceasing to function and, if a suitable configuration is used, all storage positions may even remain available and accessible both for storage and for discharge, albeit with a reduced capacity.

The same advantage applies if, according to another preferred embodiment, a separate energy supply source is provided for each of the two common conveyors, each energy supply source being capable of operating independently of the other energy supply source.

Another very advantageous preferred embodiment of the system according to the invention is characterized in that the supply conveyor branches and the discharge conveyor branches are arranged in alternating relationship for each associated common conveyor. Thus an optimally homogeneous distribution of the supply capacity and the discharge capacity is obtained. In addition to that, said preferred embodiment makes it possible to transfer an article to a discharge station and simultaneously transfer an article, during the same movement of a (preferably endless) lift conveyor forming a lift platform, from a supply station to said lift platform from the other side of the lift and subsequently store it at a storage position.

To achieve a maximum capacity and an optimum redundancy, the number of supply stations and/or the number of discharge stations is preferably at least equal to the number of lifts.

Furthermore preferably, the number of supply stations and/or the number of discharge stations exceeds the number of racks by at least one. This achieves that all storage positions of the system can be reached from the supply conveyor system via at least two supply stations and/or that goods from all storage positions can be made available on the discharge conveyor system via two discharge stations, so that failure of one supply station and/or one discharge station cannot lead to a situation in which a storage position cannot be reached by an article on the supply conveyor system and/or to in which an article present at a random storage position cannot be made available on the discharge conveyor system.

In order to reduce the amount of hardware that is required, the number of supply stations and/or the number of discharge stations is smaller than twice the number of lifts and, furthermore preferably, the number of supply stations and/or the number of discharge stations is at least equal to the number of lifts.

According to a special preferred embodiment, a supply station and a discharge station are provided on respective longitudinal sides of each path of movement in order for the supply station to supply goods to the lift that is movable along said path of movement from the longitudinal side on which the supply station is disposed and the discharge station to collect goods from the lift that is movable along said path of movement from the longitudinal side on which the discharge station is disposed. This makes it possible to effect a connection between the supply station and the discharge station on the one hand and a common conveyor on the other hand via a supply conveyor branch and a discharge conveyor branch, respectively, in a constructionally simple manner.

This advantage applies in particular if the supply station and the discharge station are disposed at the same longitudinal position along the path of movement and/or if the supply station and the discharge station are disposed at the same vertical position along the path of movement. If these two preferred embodiments are combined, it is moreover possible to unload a lift and simultaneously load it.

According to yet another preferred embodiment, supply stations and/or discharge stations are provided on both longitudinal sides of the paths of movement of lifts for supplying goods to a lift and/or collecting goods from a lift from both longitudinal sides. Because of the fact that supply stations and/or discharge stations are provided on both longitudinal sides of the paths of movement of lifts, a lift can collect luggage not only from one supply station but from two supply stations and/or deliver luggage not only to one discharge station but to two discharge stations. This implies that even in the case of a failure of a supply station or a discharge station, all storage positions can nevertheless be reached from a supply conveyor and/or temporarily stored luggage present at a random storage position can reach the discharge conveyor system. This further enhances the level of reliability.

Preferably, supply stations as well as discharge stations are provided on both longitudinal sides of the paths of movement of lifts. As a result, the advantages as regards the level of reliability are not limited to either the supplying of goods for temporary storage at the storage positions or the making available of temporarily stored goods to the discharge conveyor system, but the advantages extend to both aspects. It is further noted in this connection that although one would at first think that it is only important that goods can be made available with a high degree of reliability after temporary storage thereof in a storage system, it may also be very important that also the supply of goods to the temporary storage system can take place with a high degree of reliability. The fact is that if said high degree of reliability cannot be achieved, there is a risk that the conveying system of which the temporary storage system forms part will undesirably fill up with goods, since the goods cannot be stored in the temporary storage system. More specifically, the use of the system at airports, where luggage trays containing luggage are used, may be considered in this connection. If said luggage trays filled with luggage can be quickly made available for loading a plane with the luggage present in the luggage trays, said luggage trays can continue on their way through the overall conveying system after the plane has been loaded with the luggage. If the number of empty luggage trays gets to be significantly larger than the number of pieces of luggage being presented, this excess of empty luggage trays constitutes a heavy logistical load for the overall luggage handling system, which may have an adverse effect on the operation thereof. It is furthermore very important in connection therewith that the empty luggage trays can be stored at a storage position again with a high degree of reliability.

In particular from a viewpoint of economy of space, supply stations and discharge stations are preferably disposed one above the other. In addition this enables a quick exchange of goods between a lift on the one hand and a supply station and the discharge station in on the other hand. In this connection one can imagine that when a lift having only one lift platform (preferably in the form of a lift conveyor) is used, goods must first be transferred from the lift platform to the discharge station, after which the lift platform will quickly move in vertical direction to the level of the supply station for collecting a new product that is to be temporarily stored from the supply station. Said movement in vertical direction of a lift can generally take place more quickly than movement in horizontal direction of the lift along the associated path of movement.

In order to achieve a maximum degree of reliability, using a minimum amount of hardware, it is preferable to provide a discharge station as well as a supply station at one short end of a rack, or a discharge station at one end and a supply station at the other end. Goods can be supplied to and discharged from storage positions of a rack via the lifts on the two longitudinal sides of the rack in question, and also from/to storage positions of the two adjacent racks via the supply station in question and the discharge station in question, respectively.

The invention will now be explained in more detail by means of a description of a number of preferred embodiments of a system with which the method according to the invention can be employed, in which reference is made to the following figures:
Figure 1 is a schematic top plan view of a prior art system for temporary storage of goods as already described above;
Figure 2 is a schematic top plan view of a first preferred embodiment of a temporary storage system;
Figure 3 is a perspective view of a part of said first preferred embodiment;
Figure 4 is a schematic, perspective top plan view of a second preferred embodiment of a temporary storage system.

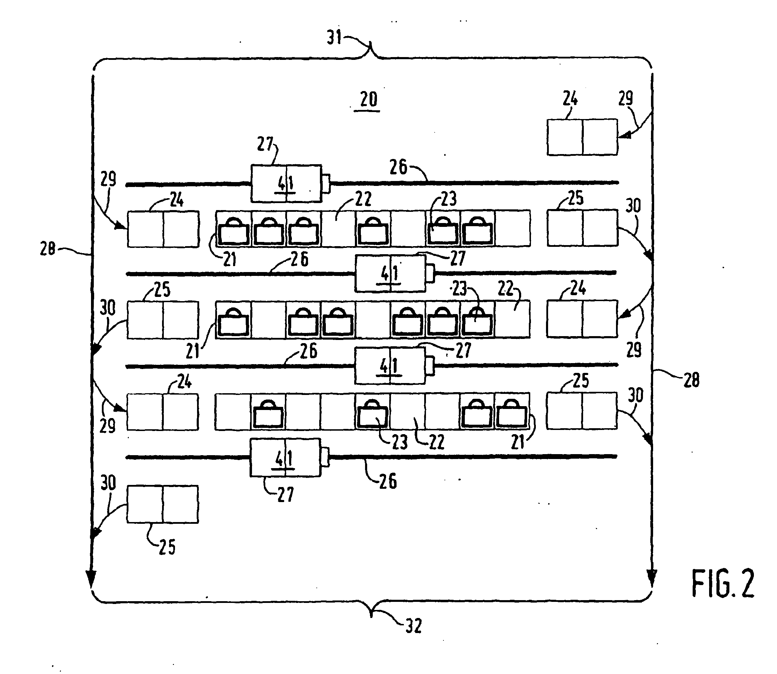

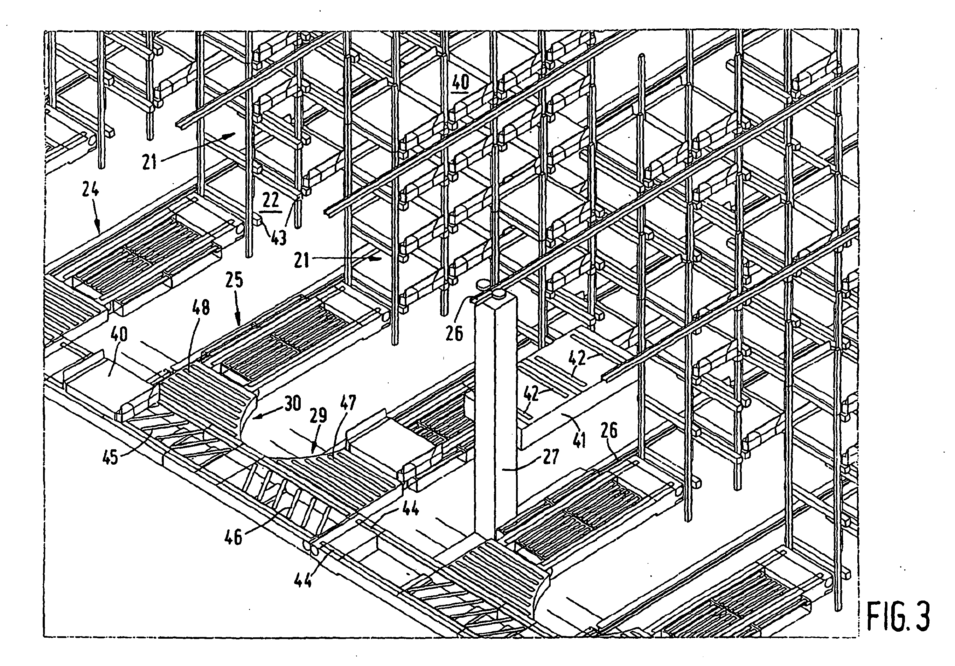

The temporary storage system 20 as schematically shown in figures 2 and 3 comprises a number of racks 21 extending parallel to each other, each rack comprising storage positions 22 arranged beside and above each other, which, in this case, may or may not be filled with a tray 40, in which a piece of luggage 23 may or may not be present. No trays 40 are shown in figure 2, whilst no pieces of luggage are shown in figure 3. A supply station 24 and a discharge station 25, each having a width of two storage positions, are present at respective short sides of each rack 21. Individual guides 26 are present between adjacent racks 21, as well as on the outer side of outermost racks 21, along which guides associated lifts 27, each comprising a lift platform 41, are movable. The guides 26 extend between the ends facing away from each other of a supply station 24 and a discharge station 25 associated with the same rack, as a result of which the lift 27 that is movable along the guide 26 in question can be positioned both opposite the supply station 24 in question and opposite the discharge station 25 in question. The width of the lift platform 41 of the lift 27 corresponds to that of the supply station 24 and that of the discharge station 25.

The supply stations 24, the discharge stations 25 and the lifts 27 are each provided with two endless belt conveyors 42 arranged beside each other, which can be driven forward and backward in a direction of movement extending perpendicularly to the longitudinal direction of the racks 21, and which can be telescoped out in the direction of the adjacent racks into storage positions 22 for delivering trays 40 to storage positions 22 or for collecting trays 40 from storage positions 22. By suitably driving the belt conveyors 42 it is possible on the one hand to transfer two trays 40, which may or may not be filled with two pieces of luggage 23, simultaneously to the lift 27 (providing said lift is positioned opposite the supply station 24 in question at that point in time), after which the lift 27 moves along the guide 26, possibly also in vertical direction, so that the lift 27 or at least the belt conveyors 42 thereof are positioned opposite suitable storage positions 22 in order for the trays 40 to be transferred from the lift 27 to the storage positions 22, to which the end the belt conveyors 42 are telescoped out towards said storage positions 22. The storage positions are provided with two parallel supporting rods 43 for supporting the trays 40, between which supporting rods the belt conveyors 42 can be telescoped in an out.

When the pieces of luggage 23 present at a storage position 22 are to be made available again at a later point in time, the lift 27 is positioned opposite the storage position 22 in question, after which the piece of luggage 23 present in a tray 40 is transferred from the storage position 22 to the lift 27 by suitably driving and telescoping the belt conveyors 42 of the lift 27. Subsequently, the lift 27 moves along the longitudinal guide 26 to a discharge station 25, where the tray 40 and the piece of luggage 23 present therein can be transferred from the lift 27 to the discharge station 25 by suitably driving the belt conveyors 42 of the lift 27 and the discharge station 25.

To increase the capacity, it is very advantageous to position the lift 27, on which a tray 40 is present that was removed from a storage position 22 shortly before, between a supply station 24 and a discharge station 25 disposed on both longitudinal sides of the associated guide 26, as a result of which it is possible, by simultaneously driving the endless conveyors of the discharge station 24, the lift 27 and the discharge station 25, to transfer a tray 40 from the lift 27 to the discharge station 25 and at the same time transfer a tray 40 intended for storage at a storage position 22 from the supply station 24 to the lift 27.

Present at the two short ends of each rack 21, on the outer side of the associated supply station 24 and the discharge station 25, are main conveyors 28, which are positioned at the same vertical level, although this is not essential for the present invention. The main conveyors 28 are intended both for supplying trays 40, which may or may not be filled with pieces of luggage 23, to supply stations 24 and for collecting trays 40 that were previously stored in a rack 21, which trays may or may not be filled with pieces of luggage 23, from a discharge station 25. To that end supply conveyor branches 29 extend from the main conveyors 28 to the supply stations 24 and discharge conveyor branches 30 extend from the discharge stations 25 to the main conveyors 28. The supply conveyor branches 29 and the discharge conveyor branches 30 are each provided with a number of conveyor rollers 47, 48 extending parallel to each other, the axes of rotation of which rollers extend perpendicularly to the longitudinal direction of the associated rack 21.

The main conveyors 28 mainly comprise two endless parallel conveyor belts 44. Driven rollers 46, 45, which are rotatably accommodated in the vertically movable frame parts, are disposed between said conveyor belts 44, at the location of the supply conveyor branches 28 and the discharge conveyor branches 30, respectively. In a lower position of such a frame part, trays 40 present on the main conveyor 28 can pass the rollers 45, 46 without impediment. If the frame part moves to an upper position during such a passage, however, the associated rollers 46 come into contact with the underside of the tray 40, causing the tray 40 to move in the direction of the supply conveyor branch 29, which subsequently transports the tray onwards to the supply station 24. In a comparable manner, trays 40 coming from a discharge station 25 can be moved onto the main conveyor 28 again, to which end the rollers 45 takeover trays 40 from the discharge conveyor branch 30 in an upper position thereof, impart a velocity component to the trays in the direction of movement of the main conveyor 28 and subsequently move them to a lower position. During the transfer as described above, the main conveyor 28 can continue to run, whilst in addition the orientation of the trays 40 does not change.

It will be understood that a control system associated with the storage system 20 is capable of selectively ensuring that pieces of luggage 23 intended for temporary storage will reach a desired storage position 22 via a desired supply conveyor branch 29, a desired supply station 24 and a desired lift 27. On the other hand, said control system is capable of ensuring that a piece of luggage that is to be made available is not transported from the discharge station 25 to a main conveyor 28 via the discharge conveyor branch 30 until space is available on the main conveyor 28. In addition to that, the control system will ensure that there will be no collisions between trays on the main conveyor 28.

In upstream direction, the main conveyors 28 form a common supply conveyor 31, whilst in downstream direction the main conveyors 28 converge into a common discharge conveyor 32. The control system will also ensure that there will be a suitable distribution from the supply conveyor 31 to the two main conveyors 28, and that there will be no collisions when the main conveyors 32 converge. It is important to realise that all storage positions 22 can be reached via both main conveyors 28. In addition to that, the pieces of luggage 23 from all storage positions 22 can be made available again on the common discharge conveyor 32 via each individual main conveyor 28. This implies that failure of one of the two main conveyors 28 will not in itself make it impossible to store trays 40, which may or may not be filled with pieces of luggage 23, at a random storage position 22 from the common supply conveyor 31, and that trays 40, which may or may not be filled with pieces of luggage 23, can reach the common discharge conveyor 32 in spite of the failure of one of the two main conveyors 28. In addition to that, failure of a supply station 24 and/or a discharge station 25 cannot lead to a storage position 22 becoming inaccessible to a tray 40 on a main conveyor 28, nor can it lead to a tray 40 present at a storage position 22 not being made available on the common discharge conveyor 32. In addition to that, failure of a lift 27 cannot lead to the undesirable results as described above, either.

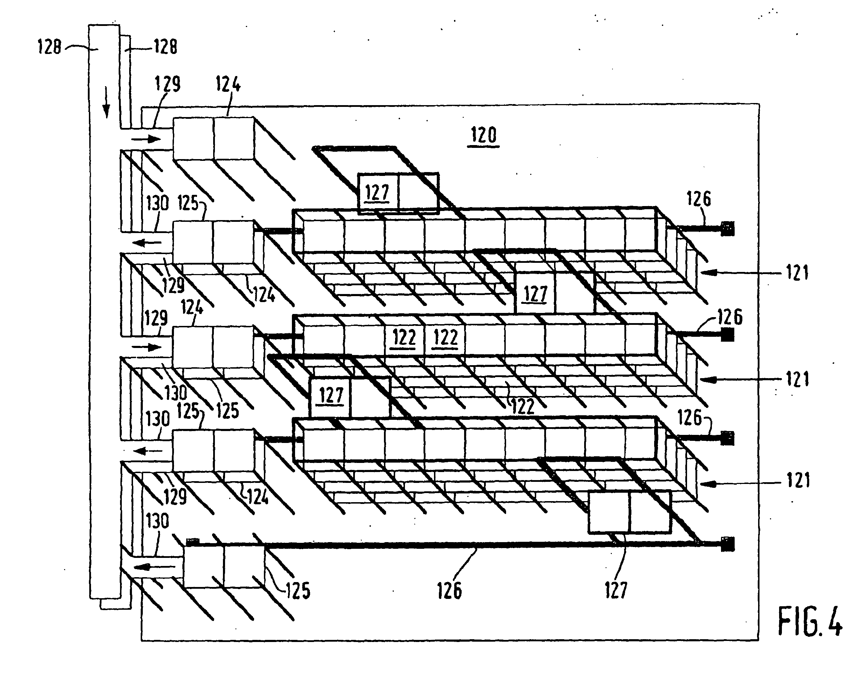

Figure 4 is a schematic, perspective top plan view of a second preferred embodiment of a storage system 120 according to the invention. Since the storage system 120 is in a sense quite similar to the storage system 20, the same numerals as in figure 3, augmented by 100, are used. The only relevant difference between the storage system 20 and the storage system 120 is the fact that the main conveyors 128 are present on one (rather than two) short sides of the racks 121, as are all supply stations 124 and discharge stations 125. The main conveyors 128 as well as the associated supply stations 124 and discharge stations 125 are disposed one above another at different vertical levels. An important advantage of the storage system 120 over the storage system 20 is the smaller floor area required for accommodating the storage system 120 in comparison with the storage system 20. In addition to that, it is rather attractive to configure the lifts 127 as a fourfold (2x2) system, in which it is possible to simultaneously exchange not only pieces of luggage positioned beside each other but also pieces of luggage positioned above each other between the lifts 127 on the one hand and the supply stations 124 and the discharge stations 125 on the other hand.

Although a lift which is movable along the outer sides of the outermost racks is present on the outer side of the outermost racks in the preferred embodiments of a temporary storage system according to the invention, these is not necessary within the framework of the present invention. It is possible to envisage embodiments which do not comprise such outer lifts, as a resul of which the outermost racks can only be reached from one side, viz. by the lift present on the other side of the outermost racks. This means a saving of the cost of (one or) two movable lifts and the associated space. The outermost racks might for example be used for temporary storage of products which do not necessarily be made available at short notice with a high degree of reliability. Such products are, for example, storage trays such as the tray 40 that is shown in figure 3, or pieces of luggage that must be stored for a relatively long period of time, for example for a few days. It is conceivable in this connection to move such pieces of luggage at some point in time, for example six hours before departure, to a rack position in a rack which, on the contrary, is flanked by two lifts, so that said piece of luggage, too, can be made available with a high degree of reliability at a desired point in time.

## Claims

1. A method for operating a system (20; 120) for temporary storage of goods (23), in particular pieces of luggage, comprising a number of rows of racks (21; 121) extending parallel to each other, each rack comprising storage positions (22; 122) located beside and above each other, on longitudinal sides of a plurality of individual racks (21; 121) lifts (27; 127) being movable along paths of movement both for delivering goods (23) to storage positions (22; 122) of the respective adjacent racks (21; 121) from said longitudinal sides and for collecting goods (23) from said storage positions (22; 122); supply stations (24; 124) and discharge stations (25; 125) disposed between paths of movement of adjacent lifts (27; 127) for supplying goods (23) to and collecting goods (23) from said lifts (27; 127), respectively, a supply conveyor system for supplying goods (23) to the supply stations (24; 124) and a discharge conveyor system for discharging goods (23) from the discharge stations (25; 125), wherein the supply conveyor system and the discharge conveyor system comprise two common conveyors (28; 128) each with supply conveyor branches (29; 129) extending from the common conveyor to supply stations (24; 124) and discharge conveyor branches (30; 130) extending from discharge stations (25; 125) to the common conveyor (28; 128), wherein said lifts (27; 127) are provided on both longitudinal sides of at least some of the individual racks (21; 121), so that the storage positions (22; 122) of said individual racks (21; 121) can be approached by a lift (27;127) from both longitudinal sides for loading and unloading the storage positions (22; 122), and goods (23) can be supplied to and be discharged from storage positions (22; 122) of one and the same rack (21; 121) via the two common conveyors (28; 128), wherein the supply and the discharge of goods (23) respectively to and from the same storage positions (22; 122) of one and the same rack (21; 121) via the one common conveyor (28; 128) take place via a lift (27; 127) disposed on one longitudinal side of the rack (21; 121) in question, and the supply and the discharge of goods (23) respectively to and from the same storage positions (22; 122) of one and the same rack (21; 121) via the other common conveyor (28; 128) take place via a lift (27, 127) on the opposite longitudinal side of the rack (21; 121) in question.

## Patentansprüche

1. Verfahren zum Betrieb eines systems (20; 120) zur vorübergehenden Lagerung von Gütern (23), insbesondere Gepäckstücken, umfassend eine Anzahl von Reihen von Gestellen (21; 121), die sich parallel zueinander erstrecken, jedes Gestell umfassend Lagerpositionen (22; 122), die neben- und übereinander angeordnet sind, auf Längsseiten einer Mehrzahl von einzelnen Gestellen (21; 121), Aufzüge (27; 127), die entlang von Transportwegen sowohl zum Zustellen von Gütern (23) zu Lagerpositionen (22; 122) der jewieiligen benachbarten Gestelle (21; 121) von den Längsseiten als auch zum Abholen von Gütern (23) von den Lagerpositionen (22; 121) bewegt werden können, Zufuhrstationen (24; 124) und Ausgabestationen (25; 15), die zwischen Transportwegen von benachbarten Aufzügen (27; 127) zum Zuführen von Gütern (23) zu beziehungsweise Abholen von Gütern (23) von den Aufzügen (27; 127) angeordnet sind, ein Zufuhrfördersystem zum Zuführen von Gütern (23) zu den Zufuhrstationen (24; 124) und ein Ausgabefördersystem zum Ausgeben von Gütern (23) von den Ausgabestationen (25; 125), wobei das Zufuhrfördersystem und das Ausgabefördersystem zwei gemeinsame Fördereinrichtungen (28; 128) mit Zufuhrförderzweigen (29, 129) die sich von der gemeinsamen Fördereinrichtung zu Zufuhrstationen (24; 124) erstrecken und Ausgabeförderzweigen (30; 130) die sich erstrecken von Ausgabestationen (25; 125) zur gemeinsamen Fördereinrichtung (28, 128) umfassen, wobei die Aufzüge (27; 127) auf beiden Längsseiten von wenigstens einigen der einzelnen Gestelle (21; 121) vorgesehen sind, so dass die Lagerpositionen (22; 122) der einzelnen Gestelle (21; 121) durch einen Aufzug (27; 127) von beiden Längsseiten zum Beladen und Entladen der Lagerpositionen (22; 122) erreicht werden können, und Gütern (23) zu den Lagerpositionen (22; 122) eines und desselben Gestells (21; 121) über die zwei Fördereinrichtungen (28; 128) zugeführt und von dort ausgegeben werden können, wobei die Zufuhr und die Ausgabe von Gütern (23) zu beziehungsweise von denselben Lagerpositionen (22; 122) eines und desselben Gestells (21; 121) über die eine gemeinsame Fördereinrichtung (28, 128) über einen Aufzug (27; 127) stattfinden, der auf einer Längsseite des betreffenden Gestells (21; 121) angeordnet ist, und die Zufuhr und Ausgabe von Gütern (23) zu beziehungsweise von denselben Lagerpositionen (22; 122) eines und desselben Gestells (21; 121) über die andere gemeinsame Fördereinrichtung (28; 128) über einen Aufzug (27; 127) stattfinden, der auf der gegenüberliegenden Längsseite des betreffenden Gestells (21; 121) angeordnet ist.

## Revendications

1. Procédé destiné au fonctionnement d'un système (20; 120) pour le stockage temporaire de marchandises (23), en particulier de bagages, comprenant un certain nombre de rangées d'étagères (21 ; 121) s'étendant parallèlement les unes par rapport aux autres, chaque étagère comprenant des positions de stockage (22 ; 122) situées les unes au-dessus et au-dessous des autres, sur les côtés longitudinaux d'une pluralité d'étagères (21 ; 121) individuelles, des dispositifs de levage (27 ; 127) étant mobiles le long de trajectoires de mouvement à la fois pour amener des marchandises (23) dans les positions de stockage (22 ; 122) des étagères (21 ; 121) adjacentes respectives à partir desdits côtés longitudinaux et pour collecter les marchandises (23) desdites positions de stockage (22 ; 122), des stations d'alimentation (24 ; 124) et des stations de décharge (25 ; 125) disposées entre les trajectoires de mouvement des dispositifs de levage (27 ; 127) adjacentes pour alimenter les marchandises (23) à et collecter les marchandises (23) desdits dispositifs de levage (27 ; 127) respectivement, un système de transporteur d'alimentation pour alimenter des marchandises (23) aux stations d'alimentation (24 ; 124) et un système de transporteur de décharge pour décharger les marchandises (23) des stations de décharge (25 ; 125), dans lequel le système de transporteur d'alimentation et le système de transporteur de décharge comprennent deux transporteurs commun (28 ; 128) chacun avec des ramifications de transporteur d'alimentation (29 ; 129) qui s'étend du transporteur commun aux stations d'alimentation (24 ; 124) et des ramifications de transporteur de décharge (30 ; 130) qui s'étend des stations de décharge (25 ; 125) au transporteur commun (28 ; 128), lesdits dispositifs de levage (27 ; 127) sont prévus des deux côtés longitudinaux d'au moins certaines des étagères individuelles (21 ; 121), de sorte que les positions de stockage (22 ; 122) desdites étagères individuelles (21 ; 121) peuvent être approchées par un dispositif de levage (27 ; 127) à partir des deux côtés longitudinaux pour charger et décharger les positions de stockage (22 ; 122), et des déchargées des positions de stockage (22 ; 122) d'une seule et même étagère (21 ; 121) via les deux transporteurs communs (28 ; 128), l'alimentation et la décharge des marchandises (23) respectivement à et des mêmes positions de stockage (22 ; 122) d'une seule et même étagère (21 ; 121) via le transporteur commun (28 ; 128) ont lieu via un dispositif de levage (27 ; 127) disposé sur un côté longitudinal de l'étagère (21 ; 121) en question, et l'alimentation et la décharge des marchandises (23) respectivement à et des mêmes positions de stockage (22 ; 122) d'une seule et même étagère (21 ; 121) via l'autre transporteur commun (28 ; 128) ont lieu via le dispositif de levage (27 ; 127) sur le côté longitudinal opposé de l'étagère (21 ; 121) en question.
